# EUROPÄISCHE PATENTSCHRIFT

(11) **EP 3 883 716 B1**
(45) Veröffentlichungstag und Bekanntmachung des Hinweises auf die Patenterteilung: **17.08.2022**
(21) Anmeldenummer: 19789897.6
(22) Anmeldetag: 10.10.2019
(51) Int. Cl.: B23K 1/005, B23K 26/03, B23K 26/21, B23K 26/38, B23K 31/00, B23K 31/12

(54) **ERKENNUNG VON BEARBEITUNGSFEHLERN EINES LASERBEARBEITUNGSSYSTEMS MITHILFE VON TIEFEN FALTENDEN NEURONALEN NETZEN**
DETECTION OF MACHINING ERRORS OF A LASER MACHINING SYSTEM USING DEEP CONVOLUTIONAL NEURAL NET
DÉTECTION D'ERREURS D'USINAGE D'UN SYSTÈME D'USINAGE LASER À L'AIDE D'UN RÉSEAU NEURAL CONVOLUTIONNEL PROFOND

(30) Priorität: 22.11.2018 DE 102018129425
(43) Veröffentlichungstag der Anmeldung: 29.09.2021
(73) Patentinhaber: Precitec GmbH & Co. KG, 76571 Gaggenau-Bad Rotenfels (DE)
(72) Erfinder: SCHWARZ, Joachim, 8451 Kleinandelfingen (CH)
(74) Vertreter: Ter Meer Steinmeister & Partner
(86) Internationale Anmeldenummer: PCT/EP2019/077481
(87) Internationale Veröffentlichungsnummer: WO 2020/104102

(56) Entgegenhaltungen:
- CN-A- 108 346 151
- DE-A1-102008 058 422
- DE-B4- 10 335 501
- DE-B4-102011 104 550
- DE-B4-102014 113 283
- DE-C1- 19 957 163
- US-A1- 2013 223 724
- US-A1- 2015 001 196
- US-A1- 2017 270 434
- KHUMAIDI AGUS ET AL: "Welding defect classification based on convolution neural network (CNN) and Gaussian kernel", 2017 INTERNATIONAL SEMINAR ON INTELLIGENT TECHNOLOGY AND ITS APPLICATIONS (ISITIA), IEEE, 28. August 2017 (2017-08-28), Seiten 261-265, XP033272611, DOI: 10.1109/ISITIA.2017.8124091 [gefunden am 2017-11-28]

## Beschreibung

Die vorliegende Offenbarung betrifft ein System zur Erkennung eines Bearbeitungsfehlers für ein Laserbearbeitungssystem zur Bearbeitung eines Werkstücks sowie ein Bearbeitungssystem zur Bearbeitung eines Werkstücks mittels eines Laserstrahls, welches ein solches System zur Erkennung eines Bearbeitungsfehlers umfasst ( siehe z.B. US 2015/001196 Al, welche den Oberbegriff des Anspruchs 1 offenbart). Ferner betrifft die vorliegende Offenbarung ein Verfahren zur Erkennung eines Bearbeitungsfehlers eines Laserbearbeitungssystems zur Bearbeitung eines Werkstücks.

### Hintergrund und Stand der Technik

In einem Bearbeitungssystem zur Bearbeitung eines Werkstücks mittels eines Laserstrahls wird der von einer Laserlichtquelle oder einem Ende einer Laserleitfaser austretende Laserstrahl mit Hilfe einer Strahlführungs- und Fokussieroptik auf das zu bearbeitende Werkstück fokussiert oder gebündelt. Die Bearbeitung kann beispielsweise ein Laserschneiden, - löten oder -schweißen umfassen. Das Laserbearbeitungssystem kann beispielsweise einen Laserbearbeitungskopf umfassen.

Insbesondere beim Laserschweißen oder -löten eines Werkstücks ist es wichtig, die Qualität der entstandenen Verbindung zu prüfen bzw. zu beurteilen. Aktuelle Lösungen für die Qualitätsbeurteilung beim Laserschweißen und -löten umfassen für gewöhnlich eine sogenannte Post- Prozess-Inspektion.

Die Post-Prozess-Inspektion von Schweiß- bzw. Lötnähten erfolgt typischerweise mittels Bildverarbeitung, bei der 2D-Bilder, die die Schweiß- bzw. Lötnähte auf der Oberfläche eines bearbeiteten Werkstücks zeigen, analysiert werden. Das Ziel der Post-Prozess-Inspektion besteht darin, alle Defekte zuverlässig zu lokalisieren und zu erkennen. In der Terminologie der Bildverarbeitung bestehen Schweiß- und Lötnahtoberflächen aus stochastischen bzw. deterministischen Texturen. Möglicherweise werden auch 3D-Daten der bearbeiteten Werkstückoberfläche erfasst, um Geometriedaten der Schweißverbindung zu ermitteln. Welche Geometriedaten erfasst und bewertet werden müssen, sind in den jeweiligen Normen vorgeschrieben. Für das Laserschweißen von Tailored Blanks ist dies beispielsweise die Norm SEL 100. Die Extraktion und Beurteilung der 2D- und 3D-Daten erfolgt in der Regel getrennt voneinander.

Aus den Daten werden signifikante Merkmale extrahiert oder berechnet, die die Qualität der Schweiß- und Lötnähte repräsentieren bzw. beschreiben. Die letztendliche Beurteilung der Bearbeitungsqualität geschieht durch die Parametrierung der Merkmalsberechnung und der Parametrierung der berechneten beschreibenden Merkmale der Texturen. Im einfachsten Fall sind dies Grenzwerte, zwischen denen sich ein Wert, der das Merkmal beschreibt, befinden muss. Beispielsweise werden lokale Fehlstellen oder Bearbeitungsfehler, wie Löcher oder Poren in der Werkstückoberfläche, über lokale Abweichungen von der Sollgeometrie (lokale extrem tiefe oder hohe Bereiche der Werkstücküberfläche) detektiert.

Es erfolgt also eine Extraktion und Klassifizierung von Merkmalen, die die Bearbeitungsqualität beschreiben. Anhand der extrahierten und klassifizierten Merkmale werden Bearbeitungsfehler erkannt und klassifiziert und das bearbeitete Werkstück wird abhängig davon beispielsweise als "gut" (d.h. geeignet für die Weiterverarbeitung oder den Verkauf) oder als "schlecht (d.h. als Ausschuss) gekennzeichnet bzw. klassifiziert. Welche signifikanten Merkmale überhaupt für die Bewertung der Qualität der Laserbearbeitung herangezogen werden können und welchen Einfluss diese Merkmale dann auf die Bewertung der Qualität haben, kann nur durch Experten auf dem Gebiet entschieden und bewerkstelligt werden, da die Komplexität dieser Systeme aufgrund der Anzahl einzustellenden Parameter sehr hoch ist. In aktuellen Systemen werden dazu bis zu 300 Parameter eingestellt. Diese Einstellungen können jedoch nur von Experten vorgenommen werden, welche langjähriges Wissen aufgebaut haben.

Diese Analyse der Texturen ist auch deshalb komplex, da die Merkmale, die die Qualität beschreiben, stark von dem verwendeten Material, der eingebrachten Laserleistung, der Schweißgeschwindigkeit und vielem mehr abhängen. Das heißt, die Extraktion und Bewertung bzw. Klassifikation der Merkmale muss über Parameter angepasst werden. Erweiterungen der Laserbearbeitung auf ein neues Material oder eine Änderung des Bearbeitungsprozesses, welcher die Oberflächentextur ändert, erfordert jeweils Änderungen in den Algorithmen und den Parametern der Bildverarbeitung. Auch jede Anpassung der Laserbearbeitung, beispielsweise durch einen Produktwechsel, erfordert das erneute Ein- oder Nachstellen der Parameter.

Die Schulung von Experten ist entsprechend aufwendig und langwierig. Darüber hinaus erfordert das Ein- und Nachstellen der Parameter lange Produktionsunterbrechungen in der Fertigung bei den Kunden der Laserbearbeitungssysteme. Zudem ist die Gefahr einer Fehlparametrierung hoch.

Es ist daher eine Aufgabe der Erfindung, die Beurteilung der Qualität der Laserbearbeitung zu vereinfachen. Ferner ist es eine Aufgabe der Erfindung, Bearbeitungsfehler zuverlässig und schnell und ohne aufwändige Parametrierungsprozesse zu erkennen.

Darüber hinaus ist es eine Aufgabe der Erfindung, ein System anzugeben, welches die Beurteilung der Qualität einer Laserbearbeitung und die Erkennung von Bearbeitungsfehlern automatisiert und somit eine Prozessüberwachung ermöglicht.

Es ist weiter eine Aufgabe der Erfindung, ein System anzugeben, bei dem eine Beurteilung der Qualität einer Laserbearbeitung und die Erkennung von Bearbeitungsfehlern schnell und einfach auf geänderte Umstände oder eine geänderte Situation, wie z.B. ein geänderter Bearbeitungsprozess oder ein anderes Werkstückmaterial, angepasst werden können.

Es ist darüber hinaus eine Aufgabe der Erfindung, ein System anzugeben, bei dem die Beurteilung der Qualität einer Laserbearbeitung und die Erkennung von Bearbeitungsfehlern basierend auf von einer bearbeiteten Werkstückoberfläche aufgenommenen Rohdaten erfolgt (sogenannte "end-to-end"-Verarbeitung bzw. -Analyse).

### Zusammenfassung der Erfindung

Diese Aufgaben werden durch den Gegenstand der unabhängigen Ansprüche gelöst. Vorteilhafte Ausführungsformen und Weiterentwicklungen sind Gegenstand der entsprechenden abhängigen Ansprüche.

Die Erfindung beruht auf dem Gedanken, dass die Beurteilung der Qualität einer Laserbearbeitung und die Erkennung von Bearbeitungsfehlern basierend auf Bild- und Höhendaten einer bearbeiteten Werkstückoberfläche erfolgt.

Gemäß einem Aspekt der vorliegenden Offenbarung ist ein System zur Erkennung eines Bearbeitungsfehlers für ein Laserbearbeitungssystem zur Bearbeitung eines Werkstücks angegeben, wobei das System umfasst: eine Erfassungseinheit zum Erfassen von Bilddaten und Höhendaten einer Werkstückoberfläche; und eine Recheneinheit, wobei die Recheneinheit eingerichtet ist, einen Eingangstensor, der auf den erfassten Bilddaten und Höhendaten basiert, zu bilden, und basierend auf dem Eingangstensor mittels einer Übertragungsfunktion einen Ausgangstensor zu bestimmen, der Informationen über einen Bearbeitungsfehler enthält,wobei die Übertragungsfunktion durch ein neuronales Netz gebildet ist,wobei der Eingangstensor ein Zweikanal-Bild aus den Höhendaten und Bilddaten umfasst.

Demnach ist das System in der Lage, selbstständig zu erkennen, ob ein Bearbeitungsfehler bei einem durch das Laserbearbeitungssystem bearbeiteten Werkstück vorliegt.

Mit anderen Worten kann anhand der Informationen über den Bearbeitungsfehler die Güte eines Bearbeitungsprozesses des Bearbeitungssystems ermittelt werden. Durch die gleichzeitige Verarbeitung von Bild- und Höhendaten kann die Auswertung zuverlässiger, kompakter und schneller erfolgen.

Die Erfassungseinheit kann eine Bilderfassungseinheit zum Erfassen der Bilddaten umfassen. Die Erfassungseinheit kann ferner eine Höhenerfassungseinheit zum Erfassen der Höhendaten umfassen. Die Bilderfassungseinheit und die Höhenerfassungseinheit können jeweils zumindest einen entsprechenden Sensor enthalten.

Vorzugsweise umfasst die Bilderfassungseinheit ein Kamerasystem, insbesondere ein 2D- und/oder 3D-Kamerasystem, vorzugsweise mit einer Auflicht-LED-Beleuchtung. Weiter vorzugsweise oder alternativ umfasst die Höhenerfassungseinheit ein Triangulationssystem und/oder ein OCT ("optical coherence tomography" oder "optische Kohärenztomographie")-System.

Gemäß einer Ausführungsform kann die Höhenerfassungseinheit, z.B. mittels des OCT-Systems, auch einen Abstand zu der Werkstückoberfläche bestimmen, z.B. einen Abstand zwischen dem Bearbeitungskopf des Laserbearbeitungssystems und der Werkstückoberfläche, und auf Basis des Abstands die Höhendaten bestimmen.

Die Erfassungseinheit kann auch einen oder mehrere Sensoren umfassen, welche eingerichtet sind, sowohl Bilddaten als auch Höhendaten zu erfassen, z.B. ein Stereo-Kamerasystem, vorzugsweise mit LED-Beleuchtung.

Vorzugsweise entsprechen die Bilddaten einem zweidimensionalen Bild bzw. einer zweidimensionalen Abbildung eines Ausschnitts der bearbeiteten Werkstückoberfläche. Die Höhendaten können einer dreidimensionalen Höhengeometrie desselben Ausschnitts der Oberfläche entsprechen. Mit anderen Worten können die Bilddaten ein zweidimensionales Bild eines Ausschnitts der bearbeiteten Werkstückoberfläche repräsentieren und die Höhendaten können eine dreidimensionale Höhen- oder Oberflächengeometrie desselben Ausschnitts der Oberfläche repräsentieren.

Die Bilddaten können also Pixeldaten eines Bildes oder eines Fotos von einem Ausschnitt der bearbeiteten Werkstückoberfläche enthalten, vorzugsweise von einem durch das Laserbearbeitungssystem zuvor bearbeiteten Ausschnitt der Werkstückoberfläche. Die Höhendaten können Höhenwerte für jeden Pixel desselben Ausschnitts der bearbeiteten Werkstückoberfläche enthalten. Die Bilddaten und die Höhendaten können gleich skaliert sein.

Vorzugsweise ist die Erfassungseinheit und/oder die Recheneinheit dazu eingerichtet, die Bilddaten und die Höhendaten so zu verarbeiten, dass für jeden Pixel des Bildes, der einen Bereich des Ausschnitts zeigt, ein Höhenwert der Höhendaten desselben Bereichs vorliegt. Der Höhenwert eines Bereichs oder Punkts der Werkstückoberfläche kann einen Abstand dieses Bereichs oder Punkt zu einer Bezugsebene bezeichnen, die vorzugsweise parallel zur Werkstückoberfläche verlaufen kann.

Die Erfassungseinheit kann eingerichtet sein, ein Zweikanal-Bild aus den Höhendaten und Bilddaten zu erzeugen.

Demnach kann das Zweikanal-Bild Pixeldaten und Höhenwerte der Werkstückoberfläche entsprechend zu den Pixeldaten enthalten. Hierbei kann jeder Pixel Helligkeitsinformationen oder Graustufen auf Basis einer optischen Abbildung der Werkstückoberfläche repräsentieren.

Die Bilddaten und/oder die Höhendaten können n x m Werte umfassen, wobei n und m natürliche Zahlen sind. Der Eingangstensor kann n × m × 2 Werte umfassen. Mit anderen Worten kann der Eingangstensor eine Dimension aufweisen, die dem zweifachen einer Anzahl von Bilddaten entspricht. Der Eingangstensor kann also doppelt so viele Werte aufweisen wie ein Bild der Werkstückoberfläche. Das Bild kann beispielsweise 1024 x 1024 Pixel aufweisen.

Ferner kann der Eingangstensor Steuerdaten des Laserbearbeitungssystems enthalten. In diesem Fall kann sich die Dimension des Eingangstensors entsprechend erhöhen. Die Steuerdaten können zumindest einen Wert umfassen, der die Ausgangsleistung eines Lasers des Laserbearbeitungssystems eine eingestellte Fokuslage des Laserstrahls, eine Bearbeitungsgeschwindigkeit, oder ähnliches, zu einem gegebenen Zeitpunkt während der Bearbeitung des Werkstücks angibt.

Im einfachsten Fall kann der Ausgangstensor die Information enthalten, ob eine Bearbeitung eines Werkstücks gut oder schlecht ist. Basierend auf dieser Information kann das bearbeitete Werkstück einer weiteren Verarbeitung unterzogen bzw. verkauft werden oder als Ausschuss markiert und nicht weiterverwendet werden. Das Ziel dieser sogenannten Post-Bearbeitungs-Inspektion des Werkstücks durch das bereitgestellte System ist es also, möglichst alle relevanten Bearbeitungsfehler oder Defekte zu erkennen.

Ferner ist das System in der Lage, bei einem vorhandenen Bearbeitungsfehler dessen Art, Position und/oder Größe auf einer Oberfläche des Werkstücks anzugeben.

Der Ausgangstensor kann daher zumindest eine der folgenden Informationen enthalten: Vorliegen eines Bearbeitungsfehlers, Art des Bearbeitungsfehlers, Position des Bearbeitungsfehlers auf der Werkstückoberfläche, Wahrscheinlichkeit, dass ein Bearbeitungsfehler einer bestimmten Art aufgetreten ist, und/oder eine räumliche und/oder flächige Ausdehnung des Bearbeitungsfehlers auf der Werkstückoberfläche.

Die Art des Bearbeitungsfehlers kann zumindest eine der folgenden sein: Poren, Löcher, eine fehlende Durchschweißung des Werkstücks, ein falscher Freund, Spritzer, oder ein Spalt.

Typischerweise erfolgt die Fehlererkennung durch das System an einer schon bearbeiteten Stelle des Werkstücks. Die Recheneinheit ist also dazu eingerichtet, den Ausgangstensor zu bestimmen, während der Bearbeitung des Werkstücks durch das Laserbearbeitungssystem oder nachdem die Bearbeitung abgeschlossen ist.

Dadurch ist es möglich zu bestimmen, ob ein oder mehrere Bearbeitungsfehler bei der Bearbeitung des Werkstücks durch das Laserbearbeitungssystem aufgetreten sind, welche räumliche Ausdehnung dieser oder diese Fehler haben, oder an welcher/en Position/en auf der Werkstückoberfläche sich dieser oder diese Fehler befinden. Darüber hinaus kann der Ausgangstensor Angaben enthalten, mit welcher Sicherheit oder Konfidenz das System das Vorhandensein eines oder mehrerer Fehler bestimmt hat.

Gemäß der Erfindung ist die Übertragungsfunktion zwischen dem Eingangstensor und dem Ausgangstensor durch ein angelerntes oder trainiertes neuronales Netz gebildet. Mit anderen Worten enthält die Recheneinheit ein neuronales Netz. Das neuronale Netz kann durch Fehlerrückführung bzw. Backpropagation trainiert worden sein.

Die Recheneinheit weist vorzugsweise eine Schnittstelle auf, die dazu eingerichtet ist, Trainingsdaten zum Trainieren oder Anpassen des neuronalen Netzes zu empfangen. Die Recheneinheit kann insbesondere dazu eingerichtet sein, das neuronale Netz mittels Transfer-Learning, z.B. basierend auf Trainingsdaten, anzupassen. Darüber hinaus kann die Recheneinheit über die Schnittstelle Steuerdaten des Laserbearbeitungssystems empfangen, die ebenfalls in den Eingangstensor für das Transfer-Learning fließen.

Die Trainingsdaten können vorgegebene Eingangstensoren, die auf von der Erfassungseinheit erfassten Bilddaten und Höhendaten einer bearbeiteten Werkstückoberfläche basieren, und den jeweiligen Eingangstensoren zugeordnete, vorgegebene Ausgangstensoren umfassen, die Informationen über einen z.B. von einem Experten identifizierten Bearbeitungsfehler der bearbeiteten Werkstückoberfläche enthalten. Dadurch kann das neuronale Netz, welches die Übertragungsfunktion bildet, an eine geänderte Situation angepasst werden. Mit anderen Worten wird die Übertragungsfunktion modifiziert. Die geänderte Situation kann beispielsweise darin bestehen, dass die zu bearbeitenden Werkstücke andere Materialien, unterschiedliche Verschmutzungsgrade und/oder Dicken aufweisen, oder dass sich die Parameter der Laserbearbeitung ändern.

Beim Transfer-Learning kann ein für das Trainieren oder Anlernen des neuronalen Netzes verwendeter Trainingsdatensatz oder ein reduzierter Trainingsdatensatz um neue Beispiele ergänzt werden.

Die Verwendung eines trainierten neuronalen Netzes, das zum Transfer-Learning eingerichtet ist, bei dem System zur Erkennung von Bearbeitungsfehlern gemäß den hierin beschriebenen Aspekten hat also den Vorteil, dass das System schnell an geänderte Situationen angepasst werden kann.

Das neuronale Netz kann ein tiefes neuronales Netz, z.B. ein tiefes faltendes neuronales Netz oder Konvolutionsnetz sein. Das Konvolutionsnetz kann zwischen 20 und 40 Konvolutionslagen, vorzugsweise 42 Konvolutionslagen, aufweisen. Darüber hinaus kann das Konvolutionsnetz eine sogenannte "Fully-Connected"-Layer aufweisen.

Gemäß einem weiteren Aspekt der Offenbarung ist ein Laserbearbeitungssystem zur Bearbeitung eines Werkstücks mittels eines Laserstrahls angegeben, wobei das Bearbeitungssystem einen Laserbearbeitungskopf zum Einstrahlen eines Laserstrahls auf ein zu bearbeitendes Werkstück und ein System zur Erkennung eines Bearbeitungsfehlers gemäß einem der hierin beschriebenen Aspekte umfasst. Vorzugsweise ist die Erfassungseinheit am Laserbearbeitungskopf angeordnet.

Gemäß einem weiteren Aspekt ist ein Verfahren zur Erkennung eines Bearbeitungsfehlers eines Laserbearbeitungssystems zur Bearbeitung eines Werkstücks angegeben, wobei das Verfahren die folgenden Schritte umfasst: Erfassen von Bilddaten und Höhendaten einer Oberfläche des Werkstücks; Bilden eines Eingangstensors, der auf den erfassten Bilddaten und Höhendaten, wobei der Eingangstensor ein Zweikanal-Bild aus den Höhendaten und Bilddaten umfasst; und Bestimmen eines Ausgangstensors, der Informationen über einen Bearbeitungsfehler eines Bearbeitungsprozesses enthält, basierend auf dem Eingangstensor und mittels einer Übertragungsfunktion, wobei die Übertragungsfunktion durch ein neuronales Netz gebildet ist.

Im Allgemeinen hat die Verwendung eines neuronalen Netzes, welches die Übertragungsfunktion bildet, den Vorteil, dass das System selbstständig erkennen kann, ob und welche Bearbeitungsfehler vorliegen. Demnach ist es nicht mehr notwendig, dass die erfassten Sensordaten, wie beispielsweise die Bild- und Höhendaten, vorverarbeitet werden müssen, um einer Fehlererkennung zugänglich zu sein. Weiterhin ist es nicht notwendig, aus den erfassten Daten Merkmale zu extrahieren, die die Bearbeitungsqualität bzw. etwaige Bearbeitungsfehler charakterisieren.

Darüber hinaus ist es nicht erforderlich, zu entscheiden, welche extrahierten Merkmale für die Beurteilung der Bearbeitungsqualität bzw. die Klassifikation der Bearbeitungsfehler notwendig bzw. relevant sind. Auch ist es nicht erforderlich, eine Parametrisierung der extrahierten Merkmale zur Klassifikation der Bearbeitungsfehler anzugeben bzw. anzupassen.

Die Bestimmung bzw. Beurteilung der Bearbeitungsqualität bzw. der Bearbeitungsfehler durch das Laserbearbeitungssystem wird dadurch vereinfacht. Die genannten Schritte müssen nicht durch Experten der Laserbearbeitung durchgeführt oder begleitet werden. Das System zur Erkennung von Bearbeitungsfehlern gemäß den hierin offenbarten Aspekten führt die Beurteilung bzw. Klassifizierung der Bearbeitungsqualität bzw. der Bearbeitungsfehler selbstständig, d.h. automatisiert, durch und kann einfach angepasst werden.

### Kurzbeschreibungen der Zeichnungen

Die Erfindung wird im Folgenden anhand von Figuren im Detail beschrieben. In den Figuren:
Fig. 1 zeigt eine schematische Darstellung eines Laserbearbeitungssystems zur Bearbeitung eines Werkstücks mittels eines Laserstrahls und ein System zur Erkennung von Bearbeitungsfehlern gemäß einer Ausführungsform;
Fig. 2 zeigt ein Blockschaltbild eines Systems zur Erkennung von Bearbeitungsfehlern gemäß einer Ausführungsform;
Fig. 3A und 3B zeigen Darstellungen von beispielhaften Bilddaten und Höhendaten;
Fig. 4A und 4B zeigen ein Blockschaltbild eines tiefen faltenden neuronalen Netzes gemäß einer Ausführungsform;
Fig. 5 zeigt ein Verfahren zur Erkennung von Bearbeitungsfehlern gemäß einer Ausführungsform.

### Detaillierte Beschreibung der Zeichnungen

Im Folgenden werden, sofern nicht anders vermerkt, für gleiche und gleichwirkende Elemente gleiche Bezugszeichen verwendet.

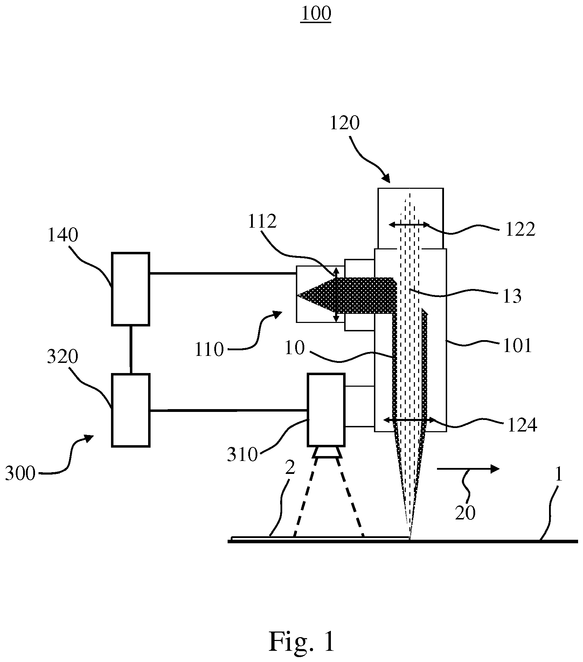

Figur 1 zeigt eine schematische Darstellung eines Laserbearbeitungssystems 100 zur Bearbeitung eines Werkstücks mittels eines Laserstrahls gemäß Ausführungsformen der vorliegenden Offenbarung. Das Laserbearbeitungssystem 100 umfasst einen Laserbearbeitungskopf 101, insbesondere einen Laserschneid-, Laserlöt- oder Laserschweißkopf und ein System 300 zur Erkennung von Bearbeitungsfehlern.

Das Laserbearbeitungssystem 100 umfasst eine Laservorrichtung 110 zum Erzeugen eines Laserstrahls 10 (auch als "Bearbeitungsstrahl" oder "Bearbeitungslaserstrahl" bezeichnet).

Das Laserbearbeitungssystem 100 oder Teile davon, wie beispielsweise der Bearbeitungskopf 101, kann gemäß Ausführungsformen entlang einer Bearbeitungsrichtung 20 bewegbar sein. Die Bearbeitungsrichtung 20 kann eine Schneid-, Löt- oder Schweißrichtung und/oder eine Bewegungsrichtung des Laserbearbeitungssystems 100, wie beispielsweise des Bearbeitungskopfes 101, bezüglich des Werkstücks 1 sein. Insbesondere kann die Bearbeitungsrichtung 20 eine horizontale Richtung sein. Die Bearbeitungsrichtung 20 kann auch als "Vorschubrichtung" bezeichnet werden.

Das Laserbearbeitungssystem 100 wird von einer Steuereinheit 140 gesteuert, die dazu eingerichtet ist, den Bearbeitungskopf 101 und/oder die Laservorrichtung 110 zu steuern.

Das System 300 zum Erkennen von Bearbeitungsfehlern umfasst eine Erfassungseinheit 310 und eine Recheneinheit 320. Die Erfassungseinheit 310 ist dazu ausgebildet, Bilddaten und Höhendaten einer bearbeiteten Oberfläche 2 des Werkstücks 1 zu erfassen. Die Erfassungseinheit 310 ist gemäß einer Ausführungsform am Bearbeitungskopf 101 angeordnet. Beispielsweise kann die Erfassungseinheit mit Bezug zur Bearbeitungsrichtung 20 nachfolgend an dem Bearbeitungskopf 101 angeordnet sein.

Die Recheneinheit 320 ist dazu eingerichtet, die von der Erfassungseinheit 310 erfassten Bilddaten und Höhendaten der bearbeiteten Werkstückoberfläche 2 zu empfangen und auf Basis der Bilddaten und Höhendaten einen Eingangstensor zu bilden. Die Recheneinheit 320 ist ferner dazu ausgebildet, anschließend auf Basis des Eingangstensors und mittels einer der Recheneinheit 320 zugänglichen Übertragungsfunktion einen Ausgangstensor zu bestimmten, der Informationen über einen Bearbeitungsfehler enthält. Mit anderen Worten kann der Ausgangstensor das Ergebnis einer oder mehrerer Rechenoperationen sein und Informationen darüber enthalten, ob und welche/r Fehler bei der Bearbeitung des Werkstücks 1 durch das Laserbearbeitungssystem 100 aufgetreten ist/sind. Ferner kann der Ausgangstensor Informationen über die Art, Position und Größe des/der Fehler auf der Werkstückoberfläche 2 enthalten.

Gemäß einer Ausführungsform ist die Recheneinheit 320 mit der Steuereinheit 140 kombiniert (nicht gezeigt). Mit anderen Worten kann die Funktionalität der Recheneinheit 320 mit derjenigen der Steuereinheit 140 in einer gemeinsamen Verarbeitungseinheit kombiniert sein.

Optional umfasst das Laserbearbeitungssystem 100 eine Messeinrichtung 120 zum Messen eines Abstands zwischen einem Endabschnitt des Bearbeitungskopfes 101 und einem zu bearbeitenden Werkstück 1. Die Messeinrichtung kann einen optischen Kohärenztomographen, insbesondere einen optischen Kurzkohärenz-Tomographen, umfassen.

Die Laservorrichtung 110 kann eine Kollimatorlinse 112 zur Kollimation des Laserstrahls 10 aufweisen. Der Kohärenztomograph kann eine Kollimator-Optik 122, die eingerichtet ist, um einen optischen Messstrahl 13 zu kollimieren, und eine Fokussier-Optik 124, die eingerichtet ist, um den optischen Messstrahl 13 auf das Werkstück 1 zu fokussieren. In der vorliegenden Offenbarung basiert die Abstandsmessung auf dem Prinzip der optischen Kohärenztomographie, die sich unter Zuhilfenahme eines Interferometers die Kohärenzeigenschaften von Lichts zunutze macht. Der optische Kohärenztomograph kann eine Auswerteeinheit mit einer breitbandigen Lichtquelle (z.B. einer Superlumineszenzdiode, SLD) umfassen (nicht gezeigt). Die Laservorrichtung 110 ist jedoch nicht auf diese Anordnung beschränkt. Anstelle eines optischen Kohärenztomographen kann die Messeinrichtung auch ein Triangulationssystem oder eine Stereokamera verwenden.

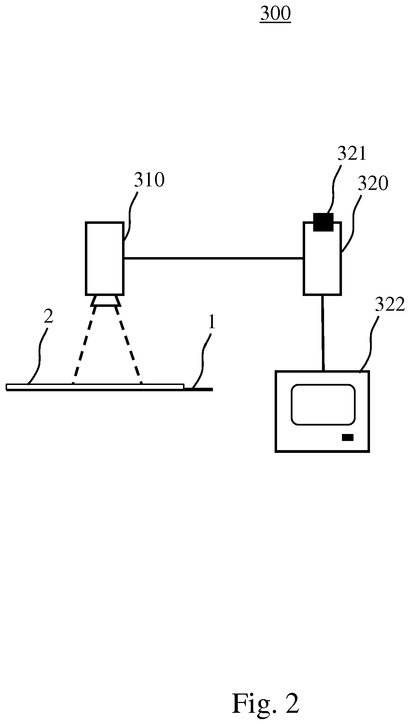

Fig. 2 zeigt ein Blockschaltbild des Systems 300 zur Erkennung eines Bearbeitungsfehlers gemäß einer Ausführungsform.

Das System 300 umfasst die Erfassungseinheit 310 und die Recheneinheit 320. Die Erfassungseinheit 310 und die Recheneinheit 320 sind miteinander verbunden, sodass die Recheneinheit 320 die von der Erfassungseinheit 310 erfassten Bilddaten und Höhendaten empfangen kann.

Die Erfassungseinheit 310 kann zumindest eines der folgenden Elemente umfassen: ein Stereo-Kamerasystem, welches dazu eingerichtet ist, sowohl Bilddaten als auch Höhendaten einer bearbeiteten Werkstückoberfläche 2 zu erfassen und auszugeben; ein Kamerasystem, z.B. mit Auflicht Led-Beleuchtung, ein Triangulationssystem oder ein OCT-System.

Gemäß einer Ausführungsform umfasst die Erfassungseinheit 310 eine Bilderfassungseinheit (nicht gezeigt), die dazu eingerichtet ist, Bilddaten von der bearbeiteten Werkstückoberfläche 2 zu erfassen, und eine Höhenerfassungseinheit (nicht gezeigt), die dazu eingerichtet ist, Höhendaten von der bearbeiteten Werkstückoberfläche 2 zu erfassen. Die Bilderfassungseinheit kann ein Kamerasystem, z.B. mit Auflicht-LED-Beleuchtung, umfassen. Die Höhenerfassungseinheit kann ein Triangulationssystem oder ein OCT-System, d.h. ein "optical coherence tomography"-System oder ein System basierend auf optischer Kohärenztomographie, umfassen.

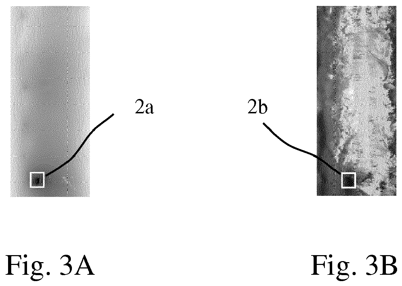

Erfindungsgemäß entsprechen die Bilddaten einer zweidimensionalen Abbildung eines Ausschnitts der bearbeiteten Werkstückoberfläche 2. Mit anderen Worten repräsentieren die erfassten oder aufgenommenen Bilddaten ein zweidimensionales Bild der bearbeiteten Werkstückoberfläche 2, wie beispielhaft in Fig. 3B gezeigt und nachfolgend im Detail beschrieben. Die Höhendaten entsprechen einer dreidimensionalen Höhengeometrie eines Ausschnitts der bearbeiteten Werkstückoberfläche 2, wie beispielhaft in Fig. 3A gezeigt und nachfolgend im Detail beschrieben. Vorzugsweise enthalten die Bilddaten und die Höhendaten Daten über denselben Ausschnitt der bearbeiteten Werkstückoberfläche 2.

Die Recheneinheit 320 enthält gemäß einer Ausführungsform einen Prozessor zum Ermitteln des Ausgangstensors. Die Übertragungsfunktion ist typischerweise in einem Speicher (nicht gezeigt) der Recheneinheit 320 abgelegt oder als Schaltkreis, beispielsweise als FPGA, realisiert. Der Speicher kann ausgebildet sein, weitere Daten, beispielsweise den ermittelten Ausgangstensor, zu speichern.

Die Recheneinheit 320 kann eine Ein-/Ausgabeeinheit 322, welche insbesondere eine graphische Benutzeroberfläche zur Interaktion mit einem Benutzer aufweisen kann, umfassen. Die Recheneinheit 320 kann eine Datenschnittstelle 321 aufweisen, über die die Recheneinheit den Ausgangstensor an eine externe Stelle, wie z.B. eine weitere Recheneinheit, Computer, PC, eine externe Speichereinheit, wie z.B. eine Datenbank, eine Speicherkarte oder Festplatte, übermitteln kann. Die Recheneinheit 320 kann ferner eine Kommunikationsschnittstelle (nicht gezeigt) aufweisen, mit der die Recheneinheit mit einem Netzwerk kommunizieren kann. Ferner kann die Recheneinheit 320 den Ausgangstensor auf der Ausgabeeinheit 322 graphisch anzeigen.

Die Recheneinheit 320 bildet aus den von der Erfassungseinheit 310 erfassten Bilddaten und Höhendaten einen Eingangstensor für eine Übertragungsfunktion. Die Bilddaten und Höhendaten werden nachfolgend mit Bezug auf Fig. 3A und 3B im Detail beschrieben.

Die Recheneinheit 320 kann ferner dazu eingerichtet sein, über die Schnittstelle 321 Steuerdaten von der Steuereinheit 140 des Laserbearbeitungssystems 100 zu empfangen und die Steuerdaten ebenfalls in den Eingangstensor aufzunehmen. Die Steuerdaten können beispielsweise die Ausgangsleistung der Laservorrichtung 110, den Abstand des Bearbeitungskopfes 101 von der Oberfläche des Werkstücks 1, die Vorschubrichtung und - geschwindigkeit, jeweils zu einem gegebenen Zeitpunkt, umfassen.

Die Übertragungsfunktion ist durch ein angelerntes, d.h. vortrainiertes, tiefes faltendes neuronales Netz gebildet. Mit anderen Worten enthält die Recheneinheit das tiefe faltende neuronale Netz. Der Ausgangstensor wird durch Anwendung der Übertragungsfunktion auf den Eingangstensor gebildet. Anhand der Übertragungsfunktion wird somit aus dem Eingangstensor der Ausgangstensor ermittelt.

Der Ausgangstensor enthält Informationen oder Daten über mindestens einen Bearbeitungsfehler. Diese Informationen oder Daten können sein: ob zumindest ein Bearbeitungsfehler vorliegt, die Art des zumindest einen Bearbeitungsfehlers, die Position des Bearbeitungsfehlers auf der Oberfläche des bearbeiteten Werkstücks 1 und/oder die Größe bzw. Ausdehnung des Bearbeitungsfehlers.

Gemäß einer Ausführungsform kann der Ausgangstensor auch die Wahrscheinlichkeit enthalten, mit der ein Bearbeitungsfehler einer bestimmten Art aufgetreten ist, bzw. mit welcher Sicherheit das System einen Bearbeitungsfehler einer bestimmten Art erkannt hat. Darüber hinaus kann der Ausgangstensor Informationen oder Daten über die räumliche oder flächige Ausdehnung des Bearbeitungsfehlers auf der Oberfläche des bearbeiteten Werkstücks umfassen.

Die Recheneinheit 320 kann gemäß einer Ausführungsform dazu eingerichtet sein, den Eingangstensor und/oder den Ausgangstensor grafisch an der Ausgabeeinheit 322 darzustellen. Beispielsweise kann die Recheneinheit 320 die im Eingangstensor enthaltenen Bilddaten und/oder die Höhendaten, wie in Fig. 3A oder 3B dargestellt, als zweidimensionale Bilder der bearbeiteten Werkstückoberfläche 2 grafisch darstellen und die im Ausgangstensor enthaltenen Informationen über einen Bearbeitungsfehler damit überlagern.

Fig. 3A zeigt eine Darstellung von Höhendaten und Fig. 3B zeigt eine Darstellung von Bilddaten gemäß einer Ausführungsform. Fig. 3A zeigt ein beispielhaftes Höhenbild einer Lötnaht, welches mit einem Triangulationssensor aufgenommen wurde. Fig. 3B zeigt ein beispielhaftes Auflichtbild der Lötnaht, welches mithilfe einer LED-Auflicht-Beleuchtung aufgenommen wurde.

Gemäß einer Ausführungsform können die von der Erfassungseinheit 310 bzw. der Bilderfassungseinheit und der Höhenerfassungseinheit erfassten Bilddaten und Höhendaten aus einer Aufnahme eines Abschnitts der bearbeiteten Werkstückoberfläche und einem entsprechenden Höhenbild gebildet sein. Die Aufnahme kann ein zweidimensionales Bild oder Foto sein, welches vorzugsweise unter LED-Auflicht-Beleuchtung gemacht worden ist und als "Auflichtbild" bezeichnet wird. Das Höhenbild kann die Höhengeometrie oder das Höhenprofil des Abschnitts der bearbeiteten Werkstückoberfläche repräsentieren. Es enthält also Informationen über die dreidimensionale Form der bearbeiteten Werkstückoberfläche.

In Fig. 3A repräsentieren unterschiedliche Grauwerte unterschiedliche Höhenwerte der bearbeiteten Werkstückoberfläche 2, die nachfolgend im Detail beschrieben werden. In Fig. 3B repräsentieren unterschiedliche Grauwerte unterschiedliche Helligkeitswerte der bearbeiteten Werkstückoberfläche 2, die durch Reflexion von Licht, beispielsweise von einer LED-Auflicht-Beleuchtung, erzeugt werden. Die Rahmen 2a, 2b stellen die Größe und Position eines erkannten Bearbeitungsfehlers dar, wie sie als Information im durch die Recheneinheit 320 bestimmten Ausgangstensor enthalten sind.

Im Höhenbild entspricht jeder Helligkeits- oder Grauwert einem Abstandswert von einer zur Werkstückoberfläche parallelen Ebene, im Auflichtbild entspricht jeder Helligkeits- oder Grauwert der Intensität des rückreflektierten Lichts auf einen Fotosensor der Erfassungseinheit bzw. der Bilderfassungseinheit.

Gemäß einer Ausführungsform werden das Auflicht- und das Höhenbild so skaliert, dass ihre Dimensionen gleich sind. Mit anderen Worten zeigen gemäß einer Ausführungsform das Auflichtbild und das Höhenbild Aufnahmen desselben Ausschnitts der bearbeiteten Werkstückoberfläche. Die Aufnahme der Bilder kann wie vorstehend beschrieben durch getrennte Aufnahmesysteme erfolgen.

Gemäß einer Ausführungsform kann bei einer Triangulationsauswertung aus der Intensität einer Triangulationslinie und deren Umgebung das Auflichtbild erstellt werden. Dabei entsteht ein Auflichtbild eines Bereichs der Werkstückoberfläche innerhalb der oder um die Triangulationslinie, indem das reflektierte Streulicht der Triangulationslinie aufgenommen wird. Werden mehrere dieser Auflichtbilder aneinandergesetzt, entsteht ein Grauwert-Bild. Die Auflösung des so erzeugten Grauwert-Bildes in Vorschubrichtung des Triangulationssystems hängt von der Scanrate des Triangulationssystems ab.

Gemäß der Erfindung sind die Aufnahme und das Höhenbild zu einem Zweikanal-Bild zusammengefasst. Demzufolge kann der von der Recheneinheit 320 gebildete Eingangstensor eine Aufnahme oder ein Bild eines Abschnitts der bearbeiteten Werkstückoberfläche mit einer Auflösung von n^{∗}m Pixeln enthalten, wobei n und m natürliche Zahlen, vorzugsweise jeweils 1024, sind. D.h. das Bild besteht aus 1024^{∗}1024 Pixeln. Der Eingangstensor kann zudem als Höhendaten für jeden Pixel einen Höhenwert umfassen. D.h. der Eingangstensor enthält das Zweikanal-Bild mit einer Dimension von 1024^{∗}1024^{∗}2. Das Zweikanal-Bild enthält also für jeden Pixel einen Helligkeitswert und einen Höhenwert, wobei der Pixel einem Bereich des Abschnitts der Werkstückoberfläche entspricht.

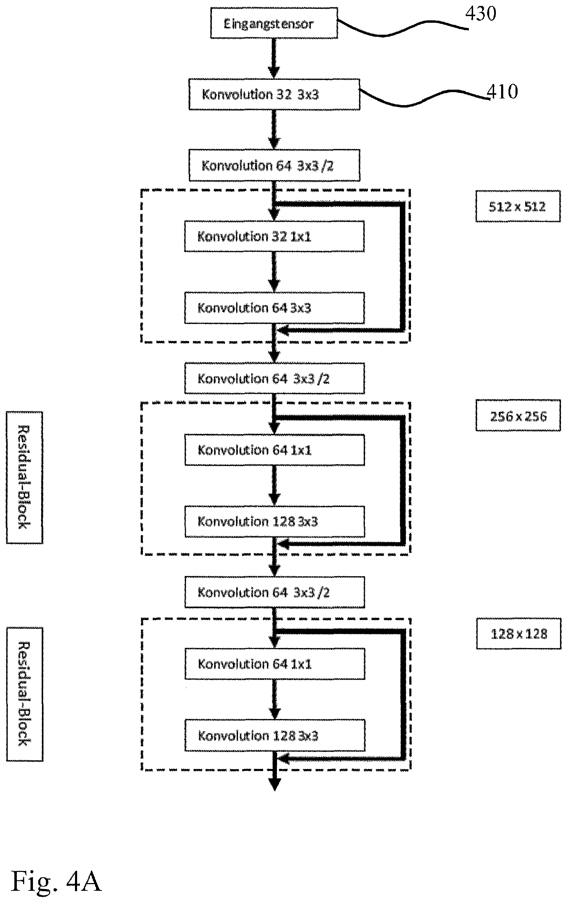

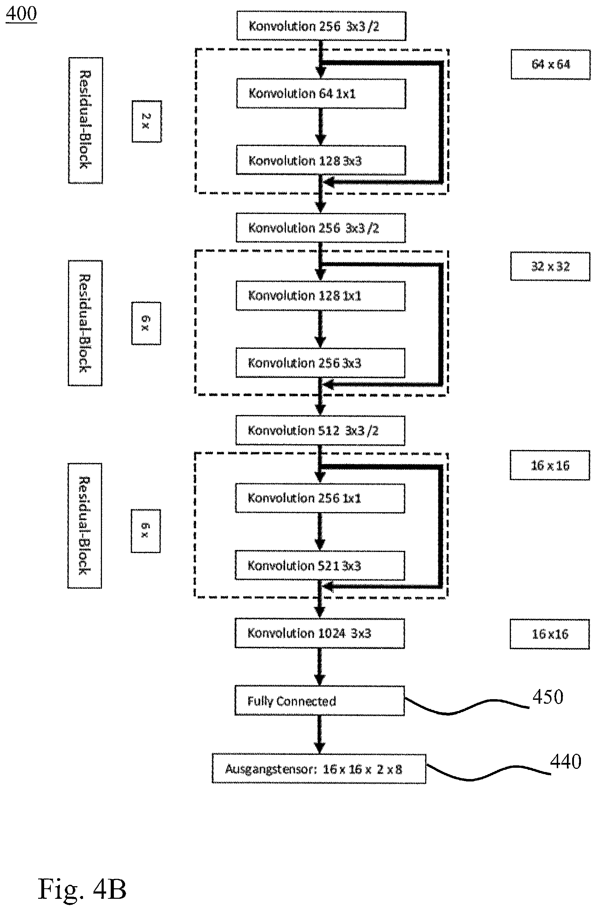

Die Recheneinheit 320 ermittelt den Ausgangstensor basierend auf dem Eingangstensor mithilfe einer Übertragungsfunktion. Die Übertragungsfunktion oder Zuordnung des Ausgangstensors zum Eingangstensor ist durch ein tiefes faltendes neuronales Netz realisiert, wie nachfolgend im Detail mit Bezug auf Fig. 4A und 4B beschrieben ist.

Fig. 4A und 4B zeigen ein Blockschaltbild eines tiefen faltenden neuronalen Netzes 400 gemäß einer Ausführungsform.

Der Eingangstensor enthält die erfassten Rohdaten, die die Bilddaten und Höhendaten umfassen. Wie vorstehend beschrieben ist der Eingangstensor aus einem 2-kanaligen Bild, bestehend aus einem Auflichtbild und einem Höhenbild, gebildet . Diese Bilddaten und Höhendaten bilden direkt den Eingangstensor des tiefen faltenden neuronalen Netzes. D.h. es findet zwischen dem Eingangstensor und dem Ausgangstensor eine sogenannte "end-to-end"-Abbildung oder -Analyse statt. Es werden also keine Merkmale in einem Zwischenschritt berechnet oder parametrisiert.

Das tiefe faltende neuronale Netz 400 ("Deep Convolutional Neural Net") im Folgenden abgekürzt mit "CNN", umfasst mehrere Schichten 410, welche Faltungen mit mehreren Kernen durchführen. Ferner kann das CNN 400 eine sogenannte "Fully-Connected"-Layer oder -Block 450 aufweisen.

Vorzugsweise kann das CNN das sogenannte "You Only Look Once"-Verfahren verwenden, um eine schnelle Erkennung und Lokalisierung von Bearbeitungsfehlern mit einer Größenangabe der Bearbeitungsfehler oder Fehlstellen zu ermöglichen.

Gemäß einer Ausführungsform ist das CNN eingerichtet, Poren (Fehler "a"), Löcher (Fehler "b") und fehlende Durchschweißungen (Fehler "c") bei der Bearbeitung eines Werkstücks 1 zu detektieren. Dies bedeutet die Klassifikation der möglichen Bearbeitungsfehler in 3 Klassen. Das Klassifikationsergebnis soll die Werte Pc (Fehler vorhanden/nicht vorhanden bzw. die Wahrscheinlichkeit für das Vorliegen eines Fehlers), Ca (Wahrscheinlichkeit für Fehler "a"), Cb (Wahrscheinlichkeit für Fehler "b"), Cc (Wahrscheinlichkeit für Fehler ""c), sowie die Werte x, y, dx, dy (Ort und Größe des jeweiligen Fehlers) umfassen. Hierbei repräsentieren die Werte x und y Koordinaten in einem zweidimensionalen kartesischen Koordinatensystem mit einer x-Achse und einer y-Achse, wobei die Ebene des zweidimensionalen kartesischen Koordinatensystems parallel zur Werkstückoberfläche angeordnet ist. Die Werte dx, dy repräsentieren dementsprechend die Ausdehnung oder Größe des Fehlers in der x- und y-Richtung.

Bei einem Eingangstensor 430 gemäß einer Ausführungsform der Dimension 1024^{∗}1024^{∗}2, d.h. einem Auflichtbild der Größe 1024^{∗}1024 Pixel und jeweils einem Höhenwert für jeden der Pixel, umfasst das CNN eine Eingangsschicht mit 1024^{∗}1024^{∗}2 Neuronen. Über das Auflichtbild werden sogenannte Grids oder Raster beispielsweise mit einer Größe von 64^{∗}64 Pixeln pro Rasterzelle gelegt. Damit ergibt sich eine Ausgangsschicht mit 16^{∗}16^{∗}8 Neuronen, das heißt der Ausgangstensor hat ebenfalls die Dimension 16^{∗}16^{∗}8.

Beispielsweise ist das Auflicht- und Höhenbild in 256 Grid- oder Rasterzellen unterteilt. Aus dem Ausgangstensor bestimmt das neuronale Netz für jeden der 256 Rasterzellen somit das Klassifikationsergebnis, welches pro Rasterzelle 8 Werte umfasst. Aus diesen 8 Werten kann für jede Rasterzelle das Ergebnis der Klassifikation bzw. Beurteilung der bearbeiteten Werkstoffoberfläche durch das neuronale Netz abgelesen werden. Gemäß einer Ausführungsform wird dabei so vorgegangen, dass zunächst der Wert Pc betrachtet wird, also die Angabe, ob ein Fehler in der entsprechenden Rasterzelle vorliegt oder nicht. Liegt ein Fehler vor, so werden als nächstes die Werte Ca, Cb und Cc betrachtet. D.h. es wird geschaut, wie hoch die Wahrscheinlichkeit ist, ob der Fehler "a", der Fehler "b" oder der Fehler "c" vorliegt. Schließlich werden die Werte für die Position und Größe des Fehlers, x, y, dx, dy betrachtet. Durch diese abgestufte bzw. schrittweise Betrachtungsweise kann eine schnelle Klassifikation bzw. Weiterverarbeitung des Ausgangstensors sichergestellt werden.

Aus der Betrachtung des Ausgangstensors bzw. dessen enthaltenen Werte kann wiederum anhand eines vorgegebenen Klassifikationsalgorithmus das bearbeitete Werkstück als "gut" oder als "schlecht" klassifiziert werden. D.h. das Werkstück kann je nach Situation als zum Verkauf oder zur Weiterverarbeitung geeignet ("gut") oder als Ausschuss bzw. dahingehend klassifiziert werden, dass noch eine Nachbearbeitung erforderlich ist ("schlecht").

Gemäß einem anderen Ausführungsbeispiel werden pro Grid- oder Rasterzelle mindestens 2 umrandete Rechtecke, sogenannte "Bounding Boxes", mit einer zugehörigen Wahrscheinlichkeit berechnet. Es wird pro umrandetem Rechteck jeweils ein Objekt lokalisiert und die Wahrscheinlichkeit für jede Fehlerklasse berechnet. Dies ergibt eine Ausgangsschicht mit 16^{∗}16^{∗}2^{∗}8 Neuronen. D.h. der Ausgangstensor 440 hat ebenfalls die Dimension 16^{∗}16^{∗}2^{∗}8.

Pro Rasterzelle entsteht demnach ein Vektor y mit dem Inhalt y=(Pc1, x1, yl, dx1, dyl, Ca1, Cb1, Cc1; Pc2, x1, x2, dx2, dy2, Ca2, Cb2, Cc2). Hierbei steht der Index "1" für das eine der beiden umrandeten Rechtecke, der Index "2" für das andere der beiden umrandeten Rechtecke. Besitzen in einer Rasterzelle beide umrandeten Rechtecke eine Wahrscheinlichkeit Pc, die größer als ein vorgegebener Schwellwert ist, wird gemäß einer Ausführungsform dasjenige Rechteck ausgewählt, welches einen größeren "IoU-Wert" hat. Der IoU-Wert bezeichnet die Schnittmenge im Verhältnis zur Vereinigungsmenge eines umrandeten Rechtecks.

Aus dem Ausgangstensor des Netzes kann direkt das Klassifikationsergebnis, z.B. mittels eines "Non-Max-Suppression" Verfahrens, ausgelesen werden. Das Trainieren des Netzes wird durch GPUs unterstützt. Die Inferenz erfolgt über FPGAs in einer Kamera oder einer Einsteckkarte in der Recheneinheit 320 mit FPGAs (nicht gezeigt).

Wie in Fig. 4A und 4B gezeigt umfasst das CNN beispielsweise 42 Faltungsschichten, wobei zumindest einige Faltungsschichten eine Normierung ("batch normlization") und sogenannte Residual-Blöcke umfassen.

Indem die Ausgänge einer Schicht normiert werden, kann das Problem "explodierender" oder "verschwindender" Gradienten vermieden werden. Das Verhalten im Inferenz-Ablauf ist weniger anfällig auf Daten anderer Distributionen.

Üblicherweise beinhaltet die Normierung den Mittelwert und die Standardabweichung über einen "Minibatch". Die Auswirkung davon ist eine Regulierung.

Im trainierten Netz werden gemäß einer Ausführungsform diese Parameter als Hyperparamctcr verwendet: "Batch Normalization", "Accclarating Dccp Network Training by Rcducing Internal Covariate Shift" (nach Sergey Ioffe, Christian Szegedy).

In Fig. 4A und 4B steht ein Block "Konvolution 32 3x3" für einen Faltungsblock mit 32 verschiedenen 3x3 Faltungsfiltermasken. D.h. der Block "Konvolution 32 3x3" erzeugt aus einem Tensor der Eingangsdimension m × n × c einen Tensor m × n × 32, m steht für die Höhe, n für die Breite, c für die Anzahl der Kanäle. Im Fall eines 2 kanaligen Eingangstensors mit 1024 x 1024 x 2 entsteht ein Tensor der Dimension 1024 x 1024 x 32, also 32 Bilder der Dimension 1024x1024. Entsprechendes gilt für die anderen Faltungsblöcke.

Die Angabe "/2" bei einem Faltungsblock in Fig. 4A und 4B beschreibt einen "Stride" von 2. Der Filterkern wird um 2 Pixel weitergeschoben, damit wird die Dimension um die Hälfte reduziert. Die Angaben über den Blöcken, z.B. "512 x512" beschreiben jeweils die Dimension m x n des Tensors ohne die Kanalanzahl.

Die Angabe "Residual-Block" gibt an, dass auf das Ergebnis einer Ausgangsschicht (1+2) der Ausgang einer vorhergehenden Schicht (1) addiert wird, bevor der Wert über die Aktivierungsfunktion weitergegeben wird.

Das verwendete CNN ist ein trainiertes bzw. angelerntes tiefes faltendes neuronales Netz. Mit anderen Worten hat das CNN anhand von Beispielen vor Auslieferung des Systems zur Erkennung von Bearbeitungsfehlern gelernt, welches eine "gute" und welches eine "schlechte" bearbeitete Werkstückoberfläche ist, bzw. welches eine "gute" und eine "schlechte" Schweißung oder Lötung bzw. Schweiß- oder Lötnaht ist. Mit anderen Worten hat das CNN gelernt, eine bearbeitete Werkstückoberfläche als "gut" oder als "schlecht" zu klassifizieren, bzw. es hat gelernt, Bearbeitungsfehler zu erkennen, zu lokalisieren, ihrer Art nach zu klassifizieren und ihre Größe zu bestimmen.

Im Falle der Post-Prozess-Oberflächeninspektion soll das System zuverlässig bestimmen, ob die bearbeitete Werkstückoberfläche Bearbeitungsfehler aufweist. Es soll erkennen, welche Fehler vorliegen (z.B. eine Pore, ein Loch, Auswurf, Spritzer, eine Anhaftung oder eine fehlende Durchschweißung bzw. "falscher Freund") und soll den Bearbeitungsfehler lokalisieren und seine Größe auf der Werkstückoberfläche angeben. Um das CNN zu trainieren und die Hyperparameter einzustellen, werden dem CNN vorgegebene Eingangstensoren und entsprechende Ausgangstensoren bereitgestellt. Die vorgegebenen Eingangstensoren enthalten die Bilddaten und die Höhendaten eines Ausschnitts einer bearbeiteten Werkstückoberfläche wie vorstehend beschrieben. Jedem vorgegebenen Eingangstensor ist ein entsprechender vorgegebener Ausgangstensor oder Ergebnistensor zugeordnet. Dieser Ausgangstensor enthält für den jeweiligen Eingangstensor das gewünschte Ergebnis des CNN für diesen Ausschnitt der Werkstückoberfläche.

Mit anderen Worten, der entsprechende vorgegebene Ausgangstensor enthält Informationen über die Klassifikation der auf dem Ausschnitt der bearbeiteten Werkstückoberfläche vorhandenen Bearbeitungsfehler, deren Position, sowie deren räumliche und/oder flächige Ausdehnung. Diese Zuordnung von einem Ausgangstensor zu jedem vorgegebenen Eingangstensor erfolgt manuell (sogenanntes "Labeling" der erfassten Bild- und Höhendaten). D.h. es erfolgt eine vorgegebene Zuordnung der Bild- und Höhendaten auf das Ergebnis der Übertragungsfunktion. Beispielsweise wird in dem Ausgangstensor angegeben, ob ein auf dem durch den Eingangstensor repräsentierten Abschnitt der bearbeiteten Werkstückoberfläche ein Fehler vorliegt, welche Art von Fehler vorliegt, an welchem Ort auf der bearbeiteten Werkstückoberfläche, beispielsweise anhand eines zweidimensionalen Koordinatensystems mit x- und y-Koordinaten, der Bearbeitungsfehler vorliegt, und welche Größe in x- und y-Richtung der Bearbeitungsfehler aufweist.

Mittels Optimierungsverfahren wird anschließend die durch das CNN gebildete Übertragungsfunktion ermittelt und in dem System 300, vorzugweise im Speicher der Recheneinheit 320, gespeichert. Das Optimierungsverfahren wird beispielsweise mit dem "Backpropagation"-Verfahren mit einer Adam Optimierung durchgeführt. Bei der Inferenz liefert das CNN die Zuordnung des 2 kanaligen Bildes auf Fehlertyp, Ort und Größe.

Das angelernte tiefe faltende neuronale Netz ist so konfiguriert, dass es mittels sogenanntem Transfer-Learning an eine geänderte Situation angepasst werden kann. Das grundlegende Training des Netzes wird im Vorfeld vor der Inbetriebnahme des Systems durchgeführt. Bei Änderungen des Bearbeitungsprozesses nach Inbetriebnahme wird lediglich ein sogenanntes Transfer-Learning durchgeführt. Die geänderte Situation kann beispielsweise darin liegen, dass sich die zu bearbeitenden Werkstücke verändern, z.B. bei einer Änderung des Werkstoffes. Auch kann sich die Dicke der Werkstückoberfläche oder die Materialzusammensetzung leicht verändern. Darüber hinaus können für die Bearbeitung des Werkstücks andere Prozessparameter verwendet werden. Dadurch können andere Bearbeitungsfehler auftreten. Beispielsweise kann sich die Wahrscheinlichkeit für die unterschiedlichen Arten von Bearbeitungsfehlern verändern oder die Bearbeitungsfehler können anders ausgebildet sein. D.h. das neuronale Netz muss an die veränderte Situation und die sich dadurch veränderten Bearbeitungsfehler angepasst werden.

Das Transfer-Learning verläuft ähnlich wie das initiale Anlernen des neuronalen Netzes. Typischerweise werden bei Transfer-Learning jedoch nur einige bestimmte Faltungsschichten des tiefen faltenden neuronalen Netzes angepasst, insbesondere die letzten zwei bis drei Faltungsschichten. Die Anzahl der Parameter des neuronalen Netzes, die verändert werden, ist hierbei wesentlich geringer als beim Trainieren bzw. Anlernen des neuronalen Netzes. Dadurch wird es ermöglicht, dass das Transfer-Learning beim Kunden rasch abgeschlossen werden kann, typischerweise in weniger als einer Stunde. D.h. beim Transfer-Learning wird nicht das gesamte neuronale Netz neu trainiert bzw. angelernt.

Die zum Transfer-Learning nötigen Trainingsdaten kann das System 300 über die Schnittstelle 321 empfangen.

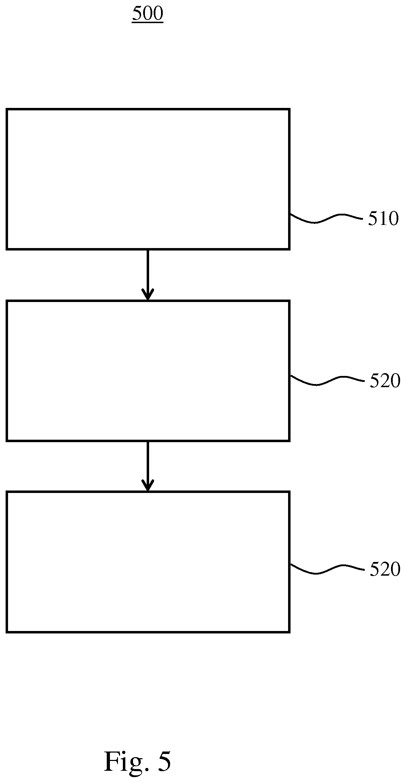

Fig. 5 zeigt ein Verfahren zur Erkennung eines Bearbeitungsfehlers eines Laserbearbeitungssystems zur Bearbeitung eines Werkstücks mittels Laserstrahlen. Der erste Schritt 510 umfasst das Erfassen von Bilddaten und Höhendaten einer durch das Laserbearbeitungssystem bearbeiteten Werkstückoberfläche. In einem zweiten Schritt 520 wird basierend auf den erfassten Bilddaten und Höhendaten ein Eingangstensor gebildet. Bei Schritt 530 wird basierend auf dem Eingangstensor mittels einer Übertragungsfunktion ein Ausgangstensor bestimmt, der Informationen über einen Bearbeitungsfehler enthält.

Das Verfahren zur Erkennung eines Bearbeitungsfehlers kann bereits während einer laufenden Bearbeitung des Werkstücks gestartet werden. Das Verfahren kann auch erst dann gestartet werden, wenn die Bearbeitung des Werkstücks abgeschlossen ist.

Das Verfahren kann für mehrere Abschnitte der bearbeiteten Werkstückoberfläche getrennt oder parallel durchgeführt werden. Gemäß einer Ausführungsform wird das Verfahren für die gesamte bearbeitete Werkstückoberfläche einmal durchlaufen. Die Bild- und Höhendaten können in diesem Fall für die gesamte bearbeitete Werkstückoberfläche lediglich einmal erfasst werden und die Bestimmung des Ausgangstensors kann nur einmal pro bearbeitetem Werkstück erfolgen.

Das Verfahren kann für jedes bearbeitete Werkstück durchgeführt werden. Gemäß einer Ausführungsform kann das Verfahren für jedes n-te durch das Laserbearbeitungssystem bearbeitete Werkstück durchgeführt werden, wobei n eine natürliche Zahl ist.

Die Verwendung eines neuronalen Netzes, welches die Übertragungsfunktion bildet, hat den Vorteil, dass das System selbstständig erkennen kann, ob und welche Bearbeitungsfehler vorliegen. Demnach ist es nicht mehr notwendig, dass die erfassten Sensordaten, wie beispielsweise die Bild- und Höhendaten, vorverarbeitet werden müssen, um einer Fehlererkennung zugänglich zu sein. Weiterhin ist es nicht notwendig, aus den erfassten Daten Merkmale zu extrahieren, die die Bearbeitungsqualität bzw. etwaige Bearbeitungsfehler charakterisieren. Darüber hinaus ist es nicht erforderlich, zu entscheiden, welche extrahierten Merkmale für die Beurteilung der Bearbeitungsqualität bzw. die Klassifikation der Bearbeitungsfehler notwendig bzw. relevant sind. Auch ist es nicht erforderlich, eine Parametrisierung der extrahierten Merkmale zur Klassifikation der Bearbeitungsfehler anzugeben bzw. anzupassen. Die Bestimmung bzw. Beurteilung der Bearbeitungsqualität bzw. der Bearbeitungsfehler durch das Laserbearbeitungssystem wird dadurch vereinfacht. Die genannten Schritte müssen nicht durch Experten der Laserbearbeitung durchgeführt oder begleitet werden.

## Patentansprüche

1. System (300) zur Erkennung eines Bearbeitungsfehlers für ein Laserbearbeitungssystem (100) zur Bearbeitung eines Werkstücks (1), umfassend:
- eine Erfassungseinheit (310) zum Erfassen von Bilddaten und Höhendaten einer bearbeiteten Werkstückoberfläche (2); und
- eine Recheneinheit (320),
**dadurch gekennzeichnet, dass**
die Recheneinheit (320) eingerichtet ist, einen Eingangstensor, der auf den erfassten Bilddaten und Höhendaten basiert, zu bilden, und basierend auf dem Eingangstensor mittels einer Übertragungsfunktion einen Ausgangstensor zu bestimmen, der Informationen über einen Bearbeitungsfehler enthält, wobei die Übertragungsfunktion durch ein neuronales Netz (400) gebildet ist,
wobei der Eingangstensor ein Zweikanal-Bild aus den Höhendaten und Bilddaten umfasst.

2. System (300) gemäß Anspruch 1, wobei die Erfassungseinheit (310)
- eine Bilderfassungseinheit zum Erfassen der Bilddaten, und
- eine Höhenerfassungseinheit zum Erfassen der Höhendaten umfasst.

3. System (300) gemäß einem der vorstehenden Ansprüche, wobei die Erfassungseinheit (310) mindestens eines von einem Kamerasystem, einem Stereo-Kamerasystem, einem OCT-System und einem Triangulationssystem umfasst.

4. System (300) gemäß einem der vorstehenden Ansprüche, wobei der Eingangstensor Rohdaten der Bilddaten und Höhendaten umfasst oder daraus besteht.

5. System (300) gemäß einem der vorstehenden Ansprüche, wobei die Bilddaten einem zweidimensionalen Bild eines Ausschnitts der bearbeiteten Werkstückoberfläche (2) entsprechen.

6. System (300) gemäß einem der vorstehenden Ansprüche, wobei die Höhendaten einer Höhengeometrie desselben Ausschnitts der bearbeiteten Werkstückoberfläche (2) entsprechen.

7. System (300) gemäß einem der vorstehenden Ansprüche, wobei die Erfassungseinheit (310) und/oder die Recheneinheit (320) eingerichtet ist, das Zweikanal-Bild aus den Höhendaten und Bilddaten zu erzeugen.

8. System (300) gemäß einem der vorstehenden Ansprüche, wobei der Ausgangstensor eine der folgenden Informationen enthält: Vorhandensein mindestens eines Bearbeitungsfehlers, Art des Bearbeitungsfehlers, Position des Bearbeitungsfehlers auf einer Oberfläche eines bearbeiteten Werkstücks, Wahrscheinlichkeit für einen Bearbeitungsfehler einer bestimmten Art, und räumliche und/oder flächige Ausdehnung des Bearbeitungsfehlers auf der Oberfläche des bearbeitenden Werkstücks.

9. System (300) gemäß einem der vorstehenden Ansprüche, wobei die Übertragungsfunktion zwischen dem Eingangstensor und dem Ausgangstensor durch ein angelerntes tiefes faltendes neuronales Netz (400) gebildet ist.

10. System (300) gemäß Anspruch 9, wobei das angelernte tiefe faltende neuronale Netz (400) mittels Transfer-Learning an eine geänderte Situation anpassbar ist.

11. System (300) gemäß Anspruch 9 oder 10, wobei die Recheneinheit (320) eine Schnittstelle (321) aufweist, die dazu eingerichtet ist, Trainingsdaten zum Anpassen des neuronalen Netzes (400) und/oder Steuerdaten zum Bestimmen des Ausgangstensors zu empfangen.

12. System (300) gemäß Anspruch 11, wobei die Trainingsdaten umfassen:
vorgegebene Eingangstensoren, die auf von der Erfassungseinheit (310) erfassten Bilddaten und Höhendaten einer bearbeiteten Werkstückoberfläche (2) basieren, und
den jeweiligen Eingangstensoren zugeordneten, vorgegebenen Ausgangstensoren, die Informationen über vorhandene Bearbeitungsfehler der bearbeiteten Werkstückoberfläche (2) enthalten.

13. System (300) gemäß einem der vorstehenden Ansprüche, wobei der Eingangstensor eine Dimension aufweist, die das Zweifache der Anzahl der Bilddaten ist.

14. Laserbearbeitungssystem (100) zur Bearbeitung eines Werkstücks mittels eines Laserstrahls, wobei das Laserbearbeitungssystem (100) umfasst:
- einen Laserbearbeitungskopf (101) zum Einstrahlen eines Laserstrahls auf ein zu bearbeitendes Werkstück (1); und
- ein System (300) gemäß den vorstehenden Ansprüchen.

15. Verfahren zur Erkennung eines Bearbeitungsfehlers eines Laserbearbeitungssystems (100) zur Bearbeitung eines Werkstücks (1), das Verfahren umfassend die Schritte:
- Erfassen (510) von Bilddaten und Höhendaten einer bearbeiteten Werkstückoberfläche (2);
- Bilden (520) eines Eingangstensors, der auf den erfassten Bilddaten und Höhendaten basiert, wobei der Eingangstensor ein Zweikanal-Bild aus den Höhendaten und Bilddaten umfasst; und
- Bestimmen (530) eines Ausgangstensors, der Informationen über einen Bearbeitungsfehler enthält, mittels einer Übertragungsfunktion, wobei die Übertragungsfunktion durch ein neuronales Netz (400) gebildet ist.

## Claims

1. A system (300) for recognizing a machining error for a laser machining system (100) for machining a workpiece (1), comprising:
- a detection unit (310) for detecting image data and height data of a machined workpiece surface (2); and
- a computing unit (320),
**characterized in that** said computing unit (320) is configured to create an input tensor based on the detected image data and height data, and to determine an output tensor based on the input tensor using a transfer function, the output tensor containing information about a machining error, wherein said transfer function is formed by a neural network (400),
wherein said input tensor comprises a two-channel image of the height data and image data.

2. The system (300) according to claim 1, wherein said detection unit (310) comprises
- an image detection unit for detecting the image data, and
- a height detection unit for detecting the height data.

3. The system (300) according to one of the preceding claims, wherein said detection unit (310) comprises at least one of a camera system, a stereo camera system, an OCT system, and a triangulation system.

4. The system (300) according to one of the preceding claims, wherein the input tensor includes or consists of raw data of the image data and height data.

5. The system (300) according to one of the preceding claims, wherein the image data correspond to a two-dimensional image of a section of the machined workpiece surface (2).

6. The system (300) according to one of the preceding claims, wherein the height data correspond to a height geometry of the same section of the machined workpiece surface (2).

7. The system (300) according to one of the preceding claims, wherein said detection unit (310) and/or said computing unit (320) is configured to create the two-channel image from the height data and image data.

8. The system (300) according to one of the preceding claims, wherein the output tensor contains one of the following pieces of information: presence of at least one machining error, type of the machining error, position of the machining error on a surface of a machined workpiece, probability of a machining error of a certain type, and spatial and/or planar extent of the machining error on the surface of the machined workpiece.

9. The system (300) according to one of the preceding claims, wherein the transfer function between the input tensor and the output tensor is formed by a taught deep convolutional neural network (400).

10. The system (300) according to claim 9, wherein said taught deep convolutional neural network (400) is adaptable to a changed situation using transfer learning.

11. The system (300) according to claim 9 or 10, wherein said computing unit (320) includes an interface (321) configured to receive training data for adapting said neural network (400) and/or control data for determining the output tensor.

12. The system (300) according to claim 11, wherein said training data comprise:
predetermined input tensors based on image data and height data of a machined workpiece surface (2) detected by said detection unit (310), and
predetermined output tensors which are associated with the respective input tensors and contain information about existing machining errors of the machined workpiece surface (2).

13. The system (300) according to one of the preceding claims, wherein the input tensor has a dimension that is twice the number of the image data.

14. A laser machining system (100) for machining a workpiece by means of a laser beam, said laser machining system (100) comprising:
- a laser machining head (101) for radiating a laser beam onto a workpiece (1) to be machined; and
- a system (300) according to one of the preceding claims.

15. A method for recognizing a machining error in a laser machining system (100) for machining a workpiece (1), said method comprising the steps of:
- detecting (510) image data and height data of a machined workpiece surface (2);
- creating (520) an input tensor based on the detected image data and height data, wherein said input tensor comprises a two-channel image of the height data and image data; and
- determining (530) an output tensor containing information about a machining error by means of a transfer function, wherein said transfer function is formed by a neural network (400).

## Revendications

1. Système (300) destiné à identifier un défaut d'usinage pour un système d'usinage au laser (100) utilisé pour l'usinage d'une pièce (1), comprenant :
- une unité de collecte (310) pour collecter des données d'image et des données de hauteur d'une surface de pièce usinée (2) ; et
- une unité de calcul (320),
**caractérisé en ce que**
l'unité de calcul (320) est configurée pour former un tenseur d'entrée basé sur les données d'image et les données de hauteur collectées, et pour déterminer un tenseur de sortie basé sur le tenseur d'entrée au moyen d'une fonction de transfert, le tenseur d'entrée contenant des informations sur un défaut d'usinage, dans lequel la fonction de transfert est formée par un réseau neuronal (400),
dans lequel le tenseur d'entrée comprend une image à deux canaux des données de hauteur et des données d'image.

2. Système (300) selon la revendication 1, dans lequel l'unité de collecte (310) comprend :
- une unité d'acquisition d'images pour collecter les données d'image, et
- une unité de détection de hauteur pour collecter les données de hauteur.

3. Système (300) selon l'une des revendications précédentes, dans lequel l'unité de collecte (310) comprend au moins un système parmi un système de prise de vues, un système de prise de vues stéréoscopique, un système de tomographie à cohérence optique (OCT) et un système de triangulation.

4. Système (300) selon l'une des revendications précédentes, dans lequel le tenseur d'entrée comprend ou est constitué de données brutes des données d'image et des données de hauteur.

5. Système (300) selon l'une des revendications précédentes, dans lequel les données d'image correspondent à une image bidimensionnelle d'une section de la surface de pièce usinée (2).

6. Système (300) selon l'une des revendications précédentes, dans lequel les données de hauteur correspondent à une géométrie de hauteur de la même section de la surface de pièce usinée (2).

7. Système (300) selon l'une des revendications précédentes, dans lequel l'unité de collecte (310) et/ou l'unité de calcul (320) est configurée pour produire l'image à deux canaux à partir des données de hauteur et des données d'image.

8. Système (300) selon l'une des revendications précédentes, dans lequel le tenseur de sortie contient l'une des informations suivantes : présence d'au moins un défaut d'usinage, type du défaut d'usinage, position du défaut d'usinage sur une surface d'une pièce usinée, probabilité d'un défaut d'usinage d'un certain type, et étendue spatiale et/ou plane du défaut d'usinage sur la surface de la pièce usinée.

9. Système (300) selon l'une des revendications précédentes, dans lequel la fonction de transfert entre le tenseur d'entrée et le tenseur de sortie est formée par un réseau neuronal convolutif profond formé (400).

10. Système (300) selon la revendication 9, dans lequel le réseau neuronal convolutif profond formé (400) peut être adapté à une situation ayant évolué, au moyen d'un apprentissage par transfert.

11. Système (300) selon la revendication 9 ou 10, dans lequel l'unité de calcul (320) comporte une interface (321) configurée pour recevoir des donnés d'apprentissage pour adapter le réseau neuronal (400) et/ou des données de commande pour déterminer le tenseur de sortie.

12. Système (300) selon la revendication 11, dans lequel les données d'apprentissage comprennent :
des tenseurs d'entrée prédéfinis basés sur des données d'image collectées par l'unité de collecte (310) et des données de hauteur d'une surface de pièce usinée (2), et
des tenseurs de sortie prédéfinis associés aux tenseurs d'entrée respectifs, les tenseurs de sortie contenant des informations sur des défauts d'usinage présents dans la surface de pièce usinée (2).

13. Système (300) selon l'une des revendications précédentes, dans lequel le tenseur d'entrée a une dimension égale au double du nombre de données d'image.

14. Système d'usinage au laser (100) pour usiner une pièce au moyen d'un faisceau laser, dans lequel le système d'usinage au laser (100) comprend :
- une tête d'usinage au laser (101) pour projeter un faisceau laser sur une pièce à usiner (1) ; et
- un système (300) selon les revendications précédentes.

15. Procédé destiné à identifier un défaut d'usinage d'un système d'usinage au laser (100) utilisé pour l'usinage d'une pièce (1), le procédé comprenant les étapes consistant à :
- collecter (510) des données d'image et des données de hauteur d'une surface de pièce usinée (2) ;
- former (520) un tenseur d'entrée basé sur les données d'image et les données de hauteur collectées, le tenseur d'entrée comprenant une image à deux canaux des données de hauteur et des données d'image ; et
- déterminer (530), au moyen d'une fonction de transfert, un tenseur de sortie qui contient des informations sur un défaut d'usinage, la fonction de transfert étant formée par un réseau neuronal (400).
